# EUROPEAN PATENT SPECIFICATION

(11) **EP 4 460 088 B1**
(45) Date of publication and mention of the grant of the patent: **18.11.2026**
(21) Application number: 23746434.2
(22) Date of filing: 29.01.2023
(51) Int. Cl.: H04L 67/141, H04L 67/125, H04W 36/08, H04W 80/04, H04W 8/26, H04L 61/2503, H04L 67/52, H04L 67/51, H04W 76/11, H04W 76/12

(54) **CONNECTION-BASED TRANSMISSION OF SENSING DATA BETWEEN AN ACCCESS NETWORK DEVICE AND AN APPLICATION SERVER**
VERBINDUNGSBASIERTE ÜBERTRAGUNG VON MESSDATEN ZWISCHEN EINER ZUGANGSNETZWERKVORRICHTUNG UND EINEM ANWENDUNGSSERVER
TRANSMISSION BASÉE SUR UNE CONNEXION DE DONNÉES DE DÉTECTION ENTRE UN DISPOSITIF DE RÉSEAU D'ACCÈS ET UN SERVEUR D'APPLICATION

(30) Priority: 30.01.2022 CN 202210114771
(43) Date of publication of application: 06.11.2024
(73) Proprietor: Huawei Technologies Co., Ltd., Shenzhen, Guangdong 518129 (CN)
(72) Inventor: YING, Jiangwei, Shenzhen, Guangdong 518129 (CN)
(74) Representative: Gill Jennings & Every LLP
(86) International application number: PCT/CN2023/073672
(87) International publication number: WO 2023/143557

(56) References cited:
- WO-A1-2023/108645
- WO-A1-2023/108648
- CN-A- 111 586 114
- CN-A- 112 887 929
- CN-A- 113 873 462
- CN-A- 113 873 462
- US-A1- 2020 267 784
- US-A1- 2020 366 642

## Description

### TECHNICAL FIELD

This application relates to the field of communication technologies, and more specifically, to an information transmission method and a communication apparatus.

### BACKGROUND

With the update of mobile communication technologies, a communication network will be constructed in a flexible and efficient manner. Currently, in scenarios such as autonomous driving, security supervision, a smart home, and a smart terminal, a sensing capability brought by a millimeter-wave band owned by an access network device and/or a terminal device may be used to perform sensing and identification on an area, an object, a terminal device, or an event. For example, an application server may obtain a sensing service requirement, to enable a device having a sensing capability to perform sensing based on the sensing service requirement. However, in a current sensing system, how to implement communication between the device having the sensing capability and the application server is still in an exploration phase. Therefore, an information transmission method and a communication apparatus are urgently needed, to improve transmission efficiency of sensing data.

CN 113 873 462 A discloses a communication-aware service communication method, network element, system, device, and medium.

CN 112 887 929 A discloses sensor networks, and in particular a data transmission method, device and system.

WO 2023/108645 A1 discloses a method, device, and computer program product for wireless communication and forms part of the state of the art pursuant to Article 54(3) EPC.

WO 2023/108648 A1 discloses a method, device, and computer program product for wireless communication and forms part of the state of the art pursuant to Article 54(3) EPC.

### SUMMARY

The objects of the invention are covered by the appended independent claims. Preferred embodiments are covered by the appended dependent claims. The scope of the invention is defined by the appended claims.

### BRIEF DESCRIPTION OF DRAWINGS

FIG. 1 is a diagram of a wireless communication system according to an embodiment of this application;
FIG. 2 is a schematic flowchart of an information transmission method according to an embodiment of this application;
FIG. 3 is a schematic flowchart of a method for receiving first address information by an access network device;
FIG. 4 is a schematic flowchart of a method for obtaining second address information by an access network device;
FIG. 5 is a schematic flowchart of a method for receiving second address information by an application server;
FIG. 6 is a schematic flowchart of another information transmission method according to an embodiment of this application;
FIG. 7 is a schematic flowchart of an example of an information transmission method according to an embodiment of this application;
FIG. 8 is a schematic flowchart of an example of another information transmission method according to an embodiment of this application;
FIG. 9 is a schematic flowchart of an example of another information transmission method according to an embodiment of this application;
FIG. 10 is a schematic flowchart of an example of another information transmission method according to an embodiment of this application; and
FIG. 11 and FIG. 12 each are a diagram of a structure of a possible communication apparatus according to an embodiment of this application.

### DESCRIPTION OF EMBODIMENTS

The following describes technical solutions in this application with reference to the accompanying drawings.

Terminologies such as "component", "module", and "system" used in this application indicate computer-related entities, hardware, firmware, combinations of hardware and software, software, or software being executed. For example, a component may be, but is not limited to, a process that is run on a processor, a processor, a target, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from the foregoing various computer-readable media that store various data structures. For example, the components may communicate by using a local and/or remote process based on a signal having one or more data packets (for example, data from two components interacting with another component in a local system, a distributed system, and/or across a network such as the Internet interacting with another system by using the signal).

The method in embodiments of this application may be applied to a long term evolution (long term evolution, LTE) system, a long term evolution-advanced (long term evolution-advanced, LTE-A) system, an enhanced long term evolution-advanced (enhanced long term evolution-advanced, eLTE) system, a 5th generation (5th Generation, 5G) mobile communication system, and a new radio (New Radio, NR) system, and the method may also be extended to similar wireless communication systems, for example, wireless fidelity (wireless fidelity, Wi-Fi), worldwide interoperability for microwave access (worldwide interoperability for microwave access, WiMAX), and a cellular system related to a 3rd generation partnership project (3rd generation partnership project, 3gpp).

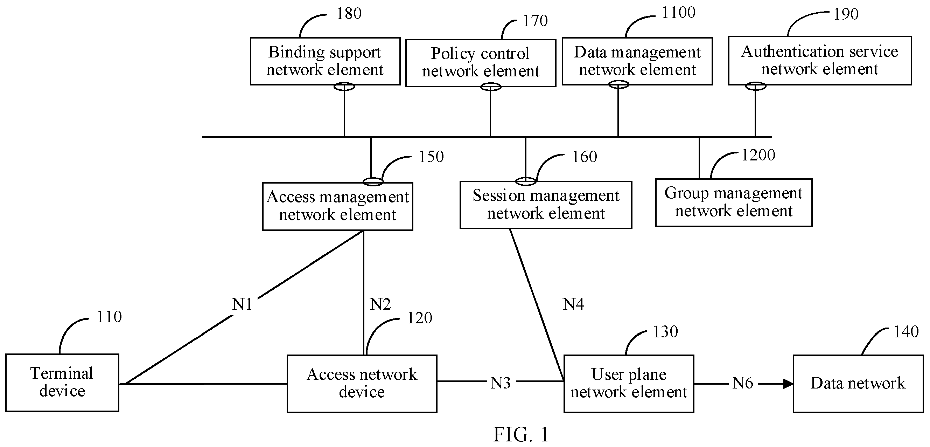

With the update of mobile communication technologies, a 5G network will be constructed in a flexible and efficient manner. The 5G network may use a communication sensing capability as a new capability. For example, a system architecture of the 5G network may be shown in FIG. 1.

FIG. 1 is a network architecture used in an embodiment of this application. Network elements that may be related in the network architecture are separately described.
1. Terminal device 110: The terminal device 110 may include various handheld devices, in-vehicle devices, wearable devices, and computing devices that have a wireless communication function, or other processing devices connected to a wireless modem, and various forms of terminals, mobile stations (mobile stations, MSs), terminals (terminals), user equipment (user equipment, UE), soft clients, and the like, for example, a water meter, an electricity meter, and a sensor.

In this application, the terminal device may further have a sensing capability. For example, a radio frequency module of the terminal device may send a radio frequency signal, and then know an environment by receiving and processing a reflected signal. Therefore, in this application, the terminal device may also detect and/or collect sensing data.

2. Access network device (radio access network, RAN) 120: The access network device 120 is configured to provide a network access function for an authorized terminal device in a specific area, and can use transmission tunnels of different quality based on a level, a service requirement, and the like of the terminal device.

The access network device can manage a radio resource and provide an access service for the terminal device, to further complete forwarding of a control signal and terminal device data between the terminal device and a core network. The access network device may also be understood as a base station in a conventional network.

In this application, when a base station performs wireless communication by using a millimeter-wave band, the base station naturally has a sensing capability similar to that of radar, that is, the base station has both a wireless communication capability and the sensing capability. Therefore, in this application, the access network device may also detect and/or collect the sensing data. The access network device in this application may also be referred to as an integrated radar and communication base station. The access network device may not only implement communication service coverage on an on-ground user, but also detect flight targets such as an uncrewed aerial vehicle, a helicopter, and a bird, and on-ground vehicle traffic, a pedestrian, and the like.

3. User plane network element 130: The user plane network element 130 is used for packet routing and forwarding, quality of service (quality of service, QoS) processing on user plane data, and the like.

In a 5G communication system, the user plane network element may be a user plane function (user plane function, UPF) network element. In a future communication system, the user plane network element may still be the UPF network element, or may have another name. This is not limited in this application.

The UPF mainly provides service processing functions of a user plane, including routing a service, forwarding a packet, anchoring, mapping and executing quality of service (quality of service, QoS), identifying an uplink identifier and routing the identifier to a data network, buffering a downlink packet, triggering a notification of downlink data arrival, and connecting to an external data network.

4. Data network 140: The data network 140 is a network used to provide data transmission.

In the 5G communication system, the data network may be a data network (data network, DN). In the future communication system, the data network may still be the DN, or may have another name. This is not limited in this application.

5. Access management network element 150: The access management network element 150 is mainly used for mobility management, access management, and the like, and may be configured to implement functions, for example, lawful interception and access authorization/authentication, other than session management in functions of a mobility management entity (mobility management entity, MME).

In the 5G communication system, the access management network element may be an access management function (access and mobility management function, AMF) network element. In the future communication system, the access management network element may still be the AMF network element, or may have another name. This is not limited in this application.

6. Session management network element 160: The session management network element 160 is mainly configured to manage a session, assign and manage an internet protocol (internet protocol, IP) address of the terminal device, select an endpoint that can manage a user plane function interface and a policy control and charging function interface, notify downlink data, and the like.

In the 5G communication system, the session management network element may be a session management function (session management function, SMF) network element. In the future communication system, the session management network element may still be the SMF network element, or may have another name. This is not limited in this application.

7. Policy control network element 170: The policy control network element 170 is configured to guide a unified policy framework of network behavior, and provide policy rule information for a control plane function network element (for example, the AMF or SMF network element), and the like.

In the 5G communication system, the policy control network element may be a policy control function (policy control function, PCF) network element. In the future communication system, the policy control network element may still be the PCF network element, or may have another name. This is not limited in this application.

8. Binding support network element 180: The binding support network element 180 is configured to search for a PCF associated with a session.

In the 5G communication system, the binding support network element may be a binding support function (binding support function, BSF) network element. In the future communication system, the binding support network element may still be the BSF network element, or may have another name. This is not limited in this application.

9. Authentication server 190: The authentication server 190 is configured to authenticate a service, generate a key to implement two-way authentication for the terminal device, and support a unified authentication framework.

In the 5G communication system, the authentication server may be an authentication server function (authentication server function, AUSF) network element. In the future communication system, the authentication server function network element may still be the AUSF network element, or may have another name. This is not limited in this application.

10. Data management network element 1100: The data management network element 1100 is configured to process a terminal device identifier, perform access authentication, registration, and mobility management, and the like.

In the 5G communication system, the data management network element may be a unified data management (unified data management, UDM) network element. In the future communication system, unified data management may still be the UDM network element, or may have another name. This is not limited in this application.

11. Network capability exposure network element 1110: The network capability exposure network element 1110 is used for connection and interaction between another network element inside the core network and an application server outside the core network, and may provide network information to the application server, or may provide information about the application server to a core network element.

In the 5G communication system, the network capability exposure network element may be a network exposure function (network exposure function, NEF) network element. In the future communication system, the network capability exposure network element may still be the NEF network element, or may have another name. This is not limited in this application.

In this embodiment of this application, the application server connected to the network capability exposure network element may be an access stratum (access stratum, AS) or an application service function (application function, AF). The application server may propose a sensing requirement, to enable a device having a sensing capability to perform a sensing operation based on the sensing requirement.

It should be noted that the foregoing "network element" may also be referred to as an entity, a device, an apparatus, a module, or the like. This is not particularly limited in this application. In addition, in this application, for ease of understanding and description, the description of the "network element" is omitted in some descriptions. For example, the AMF network element is briefly referred to as the AMF. In this case, the "AMF" should be understood as an AMF network element or an AMF entity. Same or similar cases are not described below.

It should be understood that the foregoing network architecture used in this embodiment of this application is merely an example of a network architecture described from the perspective of a service architecture, and a network architecture applicable to this embodiment of this application is not limited thereto. Any network architecture that can implement functions of the foregoing network elements is applicable to this embodiment of this application.

For example, in some network architectures, network function entities such as the AMF, the SMF, the PCF, a GMF, and the UDM are all referred to as network function (Network Function, NF) network elements. Alternatively, in some other network architectures, a set of network elements such as an AMF, an SMF, a PCF, a GMF, and a UDM may be all referred to as control plane function (Control Plane Function, CPF) network elements.

In the network architecture, an N2 interface is a reference point of the access network device and the AMF network element, and is used for sending of a non-access stratum (non-access stratum, NAS) message and the like. An N3 interface is a reference point between the access network device and the UPF network element, and is used for transmission of the user plane data and the like. An N4 interface is a reference point between the SMF network element and the UPF network element, and is used for transmission of information such as identifier information of a tunnel connected to the N3, data buffering indication information, and a downlink data notification message.

The following uses network elements in a 5G system as an example to describe specific solution details. It may be understood that, when the solution is used in the LTE system or the future communication system, each network element in the solution may be replaced with another network element having a corresponding function. This is not limited in this application.

The application server may obtain a sensing service requirement, to enable the device having the sensing capability to perform sensing based on the sensing service requirement. However, in a current sensing system, how communication is implemented between the device having the sensing capability and the application server is still in an exploration phase. Embodiments of this application provide an information transmission method and an apparatus, to enable information transmission in the sensing system to be effective. The following first describes the information transmission method.

It should be noted that, in embodiments of this application, a device that performs sensing or generates sensing data may be one terminal device or one access network device, may be a plurality of terminal devices or a plurality of access network devices, or may be one or more terminal devices and one or more access network devices. The following describes the information transmission method by using an example in which an access network device generates sensing data.

In this application, internet protocol (internet protocol, IP) address information (for example, IP address information of the access network device or IP address information of the application server) may be replaced with a media access control (media access control, MAC) address, a local area network address, an Ethernet address, a physical address, or the like. Details are not described below.

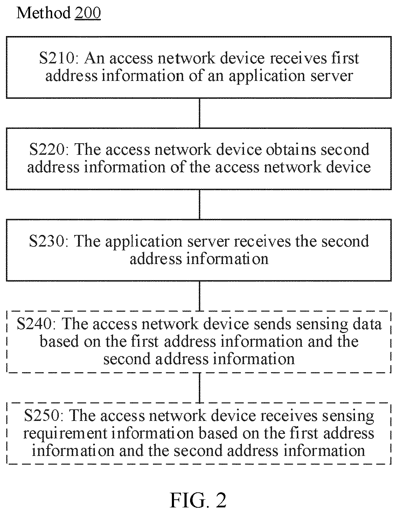

FIG. 2 is a schematic flowchart of an information transmission method 200 according to an embodiment of this application.

S210: An access network device receives first address information of an application server.

The access network device is configured to generate sensing data, the access network device is configured to perform a sensing operation to generate sensing data, or the access network device is configured to obtain sensing data from another device.

The application server may be an AS or an AF. The application server may provide a sensing service requirement, to enable the access network device to generate the sensing data based on the sensing service requirement.

For example, the first address information of the application server may refer to an IP address and/or a protocol address identifier of the application server, or may refer to a MAC address and/or a protocol address identifier of the application server.

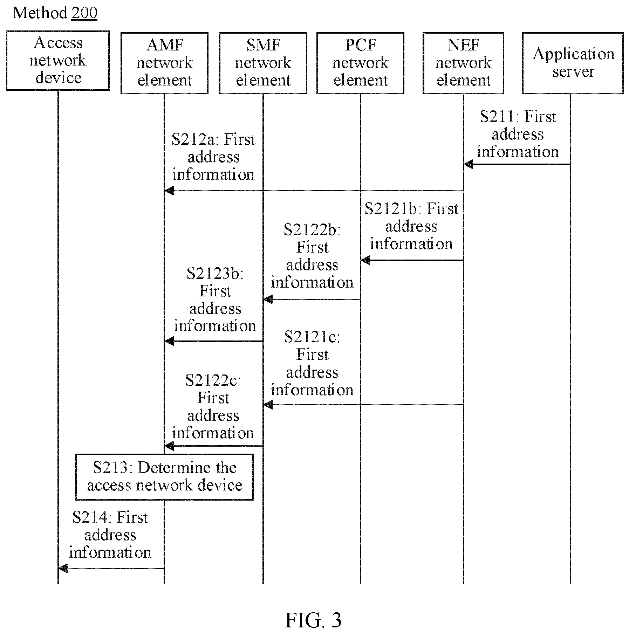

For a manner of receiving the first address information by the access network device, refer to the following descriptions in FIG. 3.

S220: The access network device obtains second address information of the access network device.

That the first address information and the second address information are used for transmission of the sensing data may be: The access network device establishes, based on the first address information and the second address information, a communication connection that is between the access network device and the application server and that is used for transmission of the sensing data. Alternatively, the application server establishes, based on the first address information and the second address information, a communication connection that is between the access network device and the application server and that is used for transmission of the sensing data. Alternatively, a UPF network element establishes, based on the first address information and the second address information, a communication connection that is between the access network device and the application server and that is used for transmission of the sensing data.

There are three cases of the second address information of the access network device. The following separately describes the three cases.

### Case 1:

The second address information is IP address information of the access network device.

The IP address information may be an address that is allocated by an SMF network element or the UPF network element to the access network device and that is used for transmission of the sensing data, or the IP address information may be address information that is obtained by the access network device from an IP address pool of the access network device and that is used for transmission of the sensing data. Then, a connection based on the IP address information of the access network device and the IP address of the server may be established between the access network device and the application server, where the connection is used for transmission of the sensing data.

In this way, in this embodiment of this application, the access network device and the application server may establish a connection based on the address information of the access network device and the address information of the application server, to implement communication. This improves transmission efficiency of the sensing data.

### Case 2:

The second address information is a proxy IP address of the access network device, and the proxy IP address corresponds to IP address information.

The IP address information of the access network device may refer to the IP address information in Case 1. That the proxy IP address corresponds to IP address information indicates that an SMF network element or the UPF network element may allocate a proxy IP address #1 to the access network device based on the IP address information of the access network device. Then, a first connection based on the IP address information and the proxy IP address #1 may be established between the access network device and the UPF network element, and a second connection based on the proxy IP address #1 and the IP address of the application server may be established between the UPF network element and the application server, where the first connection and the second connection are used for transmission of the sensing data.

For example, the access network device sends the sensing data to the UPF network element through the first connection. A source address of the first connection is the IP address information, and a destination address of the first connection is the proxy IP address #1. In this case, the UPF network element may set a source address of the second connection to the proxy IP address #1, set a destination address of the second connection to the IP address of the application server, and send the sensing data to the application server through the second connection.

Alternatively, that the proxy IP address corresponds to an IP address indicates that an SMF network element or the UPF network element may allocate two proxy addresses to the access network device based on the IP address information of the access network device: a proxy IP address #1 and a proxy IP address #2. The IP proxy address #1 and the proxy IP address #2 both are used for transmission of the sensing data. The UPF network element needs to obtain the IP proxy address #1 and the proxy IP address #2 to forward the sensing data. The access network device may obtain only the proxy IP address #1, and the application server may obtain only the proxy IP address #2. In other words, in this case, the access network device and the application server may obtain different proxy IP addresses of the access network device. In other words, the second address information obtained by the access network device and second address information obtained by the application server may be different proxy address information of the access network device.

For example, the access network device sends the sensing data to the UPF network element through a first connection. A source address of the first connection is the IP address information, and a destination address of the first connection is the proxy IP address #2. In this case, the UPF network element may set a source address of a second connection to the proxy IP address #1, set a destination address of the second connection to the IP address of the application server, and send the sensing data to the application server through the second connection.

Alternatively, for another example, the access network device sends the sensing data to the UPF network element through a first connection. A source address of the first connection is the IP address information, and a destination address of the first connection is the IP address of the server. In this case, the UPF network element may set a source address of a second connection to the proxy IP address #1, keep a destination address of the second connection as the IP address of the server, and send the sensing data to the application server through the second connection.

In this way, in this embodiment of this application, the transmission of the sensing data between the access network device and the application server may be performed by hiding the IP address information and network topology information of the access network device via the UPF network element, so that the IP address information and the network topology information of the RAN are not exposed. This improves security of information transmission in a system.

### Case 3:

The second address information is a proxy IP address of the access network device, the proxy IP address corresponds to identifier information (or address information) of a tunnel (for example, an N3 tunnel or an N3 GTP-U tunnel) between the access network device and the UPF network element, and the tunnel is used for transmission of the sensing data.

That the proxy IP address corresponds to identifier information of a tunnel indicates that an SMF network element or the UPF network element may allocate a proxy IP address #3 to the access network device based on the identifier information of the N3 tunnel. Then, the N3 tunnel used for transmission of the sensing data may be established between the access network device and the UPF network element, and a connection based on the proxy IP address #3 and the IP address of the application server may be established between the UPF network element and the application server, where the connection is used for transmission of the sensing data.

It should be noted that when the transmission of the sensing data between the access network device and the UPF network element is performed through the N3 tunnel, the sensing data may not be encapsulated based on an IP address. The identifier information of the N3 tunnel may be allocated by the SMF network element or the UPF network element.

For example, the access network device sends the sensing data to the UPF network element through the N3 tunnel. The UPF network element performs, based on the identifier information of the N3 tunnel, IP encapsulation on a sensing data packet whose transmission is performed through the N3 tunnel, sets a source address to the proxy IP address #3, sets a destination address to the IP address of the server, and sends the sensing data to the application server through a connection established based on an IP address #3 and the IP address of the server.

In this way, in this embodiment of this application, the transmission of the sensing data between the access network device and the application server may be performed by hiding IP address information and network topology information of the access network device via the UPF network element, so that the IP address information and the network topology information of the RAN are not exposed. This improves security of information transmission in a system.

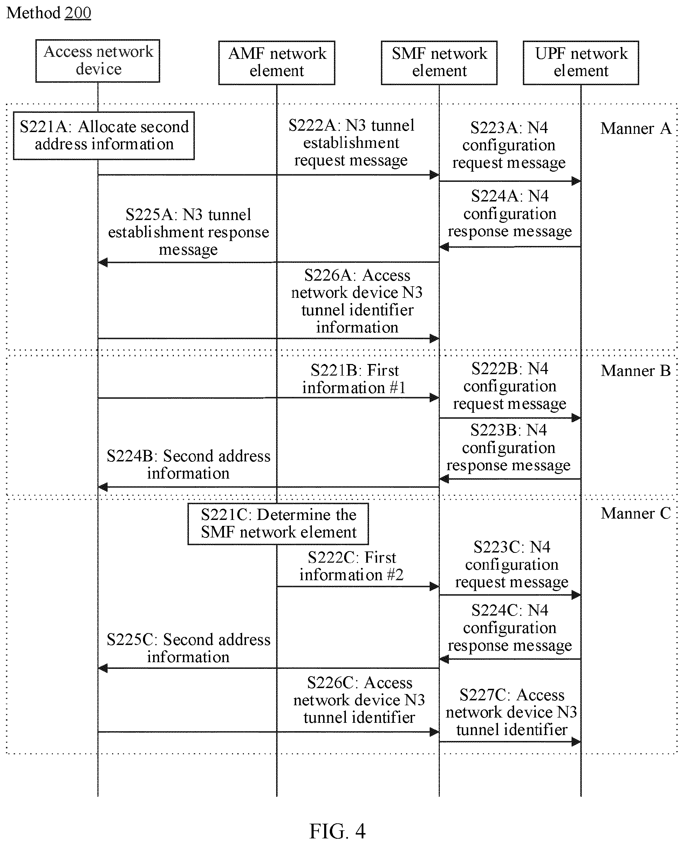

In possible manners of the foregoing three cases, the access network device may autonomously allocate the second address information, or the SMF network element or the UPF network element may allocate the second address information to the access network device. For a manner of obtaining the second address information by the access network device, refer to the following descriptions in FIG. 4.

S230: The application server receives the second address information.

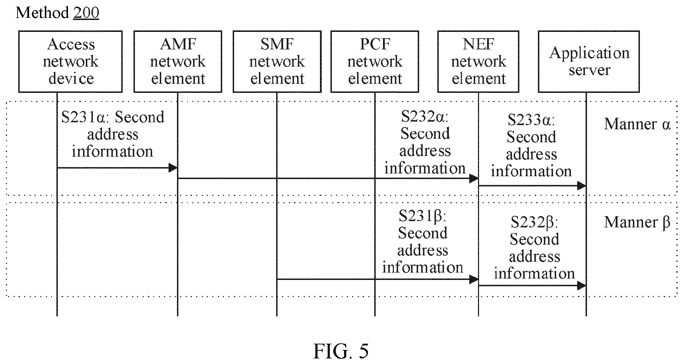

The application server may receive the second address information sent by the access network device, receive the second address information sent by the SMF network element, or receive the second address information sent by an AMF network element. For a manner of receiving the second address information by the application server, refer to the following descriptions in FIG. 5.

Optionally, in S240, the access network device sends the sensing data based on the first address information and the second address information.

The access network device may send the sensing data to the application server via the UPF network element and through the connection established based on the IP address information.

For example, when the second address information meets Case 1 described in step S220, the access network device sends the sensing data to the UPF, and the UPF network element sends the sensing data to the application server. When the second address information meets Case 2 described in step S220, the access network device sends the sensing data to the UPF network element through the first connection. After hiding the IP address information of the access network device, the UPF network element sends the sensing data to the application server. When the second address information meets Case 3 described in step S220, the access network device sends the sensing data to the UPF network element through the N3 tunnel. After hiding the address information of the access network device, the UPF network element sends the sensing data to the application server.

Optionally, in S250, the access network device receives sensing control signaling based on the first address information and the second address information.

The sensing control signaling indicates the access network device to perform the sensing operation, the sensing control signaling is used to control the access network device to perform sensing, or the sensing control signaling is control signaling related to a sensing service.

In other words, the first address information and the second address information are further used for transmission of the sensing control signaling, the connection established based on the first address information and the second address information may be further used for transmission of the sensing control signaling, or the first address information and the second address information may be further used to establish a connection used for transmission of the sensing control signaling.

In this way, in this application, the access network device and the application server may establish a connection based on the address information of the access network device and the address information of the application server, to implement communication. This can implement effective information transmission in a sensing system.

In addition, in a possible implementation, the access network device may further receive third address information of the application server used for transmission of the sensing control signaling, and obtain fourth address information of the access network device used for transmission of the sensing control signaling. The third address information and the fourth address information are used for transmission of the sensing control signaling. The third address information and the first address information may be the same or different, and the fourth address information and the second address information may be the same or different. A manner of obtaining the third address information is similar to the manner of obtaining the first address information. A manner of obtaining the fourth address information is similar to the manner of obtaining the second address information. A manner of using the third address information and the fourth address information to establish the connection used for transmission of the sensing control signaling is similar to the manner of using the first address information and the second address information to establish the connection used for transmission of the sensing data. For brevity, details are not described herein again.

With reference to FIG. 3, the following describes three manners of receiving the first address information by the access network device. In Manner a, for step S210 in the method 200, steps S211, S2121a, S213, and S214 are performed. In Manner b, for step S210 in the method 200, steps S211, S2121b to S2123b, S213, and S214 are performed. In Manner c, for step S210 in the method 200, steps S211, S2121c to S2122c, S213, and S214 are performed.

S211: The application server sends the first address information to a NEF network element, and correspondingly, the NEF network element receives the first address information from the application server.

For example, the application server sends a sensing service request message to the NEF network element. The sensing service request message carries the first address information, and the sensing service request message may be used to request the access network device to perform the sensing service.

Optionally, the application server may further send at least one of the following information to the NEF network element: location information and sensing indication information. The location information and the sensing indication information may also be carried in the sensing service request message.

The location information may indicate a sensing area. The sensing area may be an area in which the access network device performs sensing and detection. The location information may be location coordinates of an area, or location coordinates of a to-be-sensed target (for example, a to-be-sensed area, object, location, event, or terminal device) corresponding to the sensing service. The sensing indication information may indicate the sensing service, or indicate that the sensing service request message is used to request the sensing service from a network.

### Manner a:

S212a: The NEF network element sends the first address information to the AMF network element, and correspondingly, the AMF network element receives the first address information from the NEF network element.

For example, the NEF network element sends the sensing service request message to the AMF network element.

Optionally, before the NEF network element sends the first address information to the AMF network element, the NEF network element determines the AMF network element based on the location information.

For example, the AMF network element may manage at least one access network device, and learn of a sensing range of the at least one access network device. The NEF network element determines an appropriate AMF network element based on the location information, to enable the sensing range of the access network device managed by the AMF network element to cover the sensing area.

### Manner b:

S2121b: The NEF network element sends the first address information to a PCF network element, and correspondingly, the PCF network element receives the first address information from the NEF network element.

For example, the NEF network element sends the sensing service request message to the PCF network element.

Optionally, before the NEF network element sends the first address information to the PCF network element, the NEF network element determines the PCF network element based on the location information in the sensing service request message.

For example, the NEF network element determines an appropriate PCF network element based on the location information, to enable a service area of the PCF network element to cover the sensing area.

S2122b: The PCF network element sends the first address information to the SMF network element, and correspondingly, the SMF network element receives the first address information from the PCF network element.

For example, the PCF network element sends the sensing service request message to the SMF network element.

Optionally, before the PCF network element sends the first address information to the SMF network element, the PCF network element determines the SMF network element based on the location information in the sensing service request message.

For example, the PCF network element determines an appropriate SMF network element based on the location information, to enable a service area of the SMF network element to cover the sensing area.

S2123b: The SMF network element sends the first address information to the AMF network element, and correspondingly, the AMF network element receives the first address information from the SMF network element.

For example, the SMF network element sends a sensing service notification message to the AMF network element, and the sensing service notification message carries the first address information.

Optionally, the SMF network element may further send at least one of the following information to the AMF network element: the location information and the sensing indication information. The location information and the sensing indication information may also be carried in the sensing service notification message.

Optionally, before the SMF network element sends the first address information to the AMF network element, the SMF network element determines the AMF network element based on the location information in the sensing service notification message.

For example, the SMF network element determines an appropriate AMF network element based on the location information, to enable a service area of the AMF network element to cover the sensing area.

### Manner c:

S2121c: The NEF network element sends the first address information to the SMF network element, and correspondingly, the SMF network element receives the first address information from the NEF network element.

For example, the NEF network element sends the sensing service request message to the SMF network element.

Optionally, before the NEF network element sends the first address information to the SMF network element, the NEF network element determines the SMF network element based on the location information in the sensing service request message.

For example, the NEF network element determines an appropriate SMF network element based on the location information, to enable a service area of the SMF network element to cover the sensing area.

S2122c: The SMF network element sends the first address information to the AMF network element, and correspondingly, the AMF network element receives the first address information from the SMF network element.

For example, the SMF network element sends a sensing service notification message to the AMF network element.

Optionally, before the SMF network element sends the first address information to the AMF network element, the SMF network element determines the AMF network element based on the location information in the sensing service notification message.

For example, the SMF network element determines an appropriate AMF network element based on the location information, to enable a service area of the AMF network element to cover the sensing area.

S213: The AMF network element determines the access network device.

For example, the AMF network element determines, based on the location information in the sensing service request message, the access network device that performs the sensing service, to enable a sensing capability range of the access network device to cover the sensing area.

S214: The AMF network element sends the first address information to the access network device, and correspondingly, the access network device receives the first address information from the AMF network element.

For example, the AMF network element sends an N2 configuration request message to the access network device, where the N2 configuration request message carries the first address information.

Optionally, the AMF network element sends the sensing indication information to the access network device, and the sensing indication information may also be carried in the N2 configuration request message. The sensing indication information may indicate the sensing service, or the sensing indication information indicates that the N2 configuration request message is used to perform the sensing service.

The foregoing describes the manners of receiving the first address information by the access network device.

With reference to FIG. 4, the following describes three manners of obtaining the second address information by the access network device. In Manner A, for step S220 in the method 200, steps S221A to S225A are performed. In Manner B, for step S220 in the method 200, steps S221B to S224B are performed. In Manner C, for step S220 in the method 200, steps S221C to S227C are performed.

### Manner A:

S221A: The access network device allocates the second address information.

The second address information may meet Case 1 described in step S220, in other words, the second address information is the IP address information of the access network device. The access network device may obtain, based on the IP address pool of the access network device, the second address information used for transmission of the sensing data.

Optionally, in S222A, the access network device sends an N3 tunnel establishment request message to the SMF network element, and correspondingly, the SMF network element receives the N3 tunnel establishment request message from the access network device.

The N3 tunnel establishment request message (which may also be referred to as a per node N3 tunnel establishment request message) is used to establish the N3 tunnel used for transmission of the sensing data.

Optionally, the N3 tunnel establishment request message may carry the sensing indication information. The sensing indication information indicates the sensing service, or the sensing indication information may indicate that the N3 tunnel requested to be established is used for transmission of the sensing data. The N3 tunnel establishment request message may further include access network device N3 tunnel identifier information, and the access network device N3 tunnel identifier information is used to establish the N3 tunnel used for transmission of the sensing data.

Optionally, in S223A, the SMF network element sends an N4 configuration request message to the UPF network element, and correspondingly, the UPF network element receives the N4 configuration request message from the SMF network element.

The N4 configuration request message is used to request to establish an N4 connection, and the N4 connection is used to manage and control the N3 tunnel.

The N4 configuration request message may carry the access network device N3 tunnel identifier information and core network N3 tunnel identifier information.

Optionally, in S224A, the UPF network element sends an N4 configuration response message to the SMF network element, and correspondingly, the SMF network element receives the N4 configuration response message from the UPF network element.

The N4 configuration response message is used to respond to the N4 configuration request message.

Optionally, in S225A, the SMF network element sends an N3 tunnel establishment response message to the access network device, and correspondingly, the access network device receives the N3 tunnel establishment response message from the SMF network element.

The N3 tunnel establishment response message is used to respond to the N3 tunnel establishment request message. The N3 tunnel establishment request message may include the identifier information of the N3 tunnel, and the identifier information of the N3 tunnel may be a core network N3 tunnel identifier.

If the N3 tunnel establishment request message does not include the access network device N3 tunnel identifier information, after step S225A, Manner A may further include step S226A.

Optionally, step S225A may alternatively be replaced with the following: The SMF network element sends an N3 tunnel establishment response message to the AMF network element, and the AMF network element sends the N3 tunnel establishment response message to the access network device. In other words, the SMF network element may send the N3 tunnel establishment response message to the access network device via the AMF network element.

Optionally, in S226A, the access network device sends the access network device N3 tunnel identifier information to the SMF network element, and correspondingly, the SMF network element receives the access network device N3 tunnel identifier information from the access network device.

For example, the access network device sends an N3 tunnel establishment response acknowledgement message to the SMF network element, where the N3 tunnel establishment response acknowledgement message carries the access network device N3 tunnel identifier information.

Optionally, step S226A may alternatively be replaced with the following: The access network device sends the N3 tunnel identifier information to the AMF network element, and correspondingly, the AMF network element receives the N3 tunnel identifier information from the access network device.

In this way, in Manner A, the access network device may autonomously obtain the second address information, in other words, autonomously obtain the IP address information.

### Manner B:

S221B: The access network device sends first information #1 to the SMF network element, and correspondingly, the SMF network element receives the first information #1 from the access network device.

The first information #1 is used to request the second address information.

For example, the first information #1 is an N3 tunnel establishment request message (which may also be referred to as a per node N3 tunnel establishment request message). The SMF network element or the UPF network element allocates the second address information to the access network device based on the N3 tunnel establishment request message.

When the second address information meets Case 1 described in step S220, in other words, the second address information is the IP address information of the access network device, the N3 tunnel establishment request message (the first information #1) may include the sensing indication information. The sensing indication information indicates the sensing service, or the sensing indication information may indicate that the N3 tunnel requested to be established is used for transmission of the sensing data. Optionally, the N3 tunnel establishment request message further includes access network N3 tunnel identifier information. The access network device N3 tunnel identifier information may be a full-tunnel endpoint identifier (full-tunnel endpoint identifier, F-TEID), and the full-tunnel endpoint identifier is used to establish the N3 tunnel used for transmission of the sensing data.

When the second address information meets Case 2 described in step S220, in other words, the second address information is the proxy IP address #1, where the proxy IP address #1 corresponds to the IP address information of the access network device, if the IP address information of the access network device is allocated by an access device, the N3 tunnel establishment request message (the first information #1) may include the IP address information. If the destination address of the connection between the access network device and the UPF network element is the proxy IP address #1 or the proxy IP address #2 instead of the IP address information of the server (refer to the descriptions of Case 2 in step S220), the N3 tunnel establishment request message may include the first address information, and the first address information is used by the UPF network element to forward the sensing data. Optionally, the N3 tunnel establishment request message further includes access network device N3 tunnel identifier information, and the access network device N3 tunnel identifier information is used to establish the N3 tunnel used for transmission of the sensing data. Optionally, the N3 tunnel establishment request message further includes the sensing indication information. The sensing indication information indicates the sensing service, or the sensing indication information may indicate that the N3 tunnel requested to be established is used for transmission of the sensing data.

When the second address information meets Case 3 described in step S220, in other words, the second address information is the proxy IP address #3, where the proxy IP address #3 corresponds to the identifier information of the N3 tunnel, the N3 tunnel establishment request message may include the first address information, and the first address information is used by the UPF network element to forward the sensing data. If access network device N3 tunnel identifier information is allocated by the access network device, the N3 tunnel establishment request message further includes the access network device N3 tunnel identifier information, and the access network device N3 tunnel identifier information is used to establish the N3 tunnel used for transmission of the sensing data. Optionally, the N3 tunnel establishment request message further includes the sensing indication information. The sensing indication information indicates the sensing service, or the sensing indication information may indicate that the N3 tunnel requested to be established is used for transmission of the sensing data.

Optionally, in S222B, the SMF network element sends an N4 configuration request message to the UPF network element, and correspondingly, the UPF network element receives the N4 configuration request message from the SMF network element.

The N4 configuration request message is used to request to establish an N4 connection, and the N4 connection is used to manage and control the N3 tunnel.

When the second address information meets Case 1 described in step S220, in other words, the second address information is the IP address information of the access network device, the N4 configuration request message may include the identifier information of the N3 tunnel.

When the second address information meets Case 2 described in step S220, in other words, the second address information is the proxy IP address #1, where the proxy IP address #1 corresponds to the IP address information of the access network device, the N4 configuration request message may include the identifier information of the N3 tunnel. If the IP address information of the access network device is allocated by the access device or the SMF network element, optionally, the N4 configuration request message may include the IP address information. If the proxy IP address #1 is allocated by the SMF network element, the N4 configuration request message includes the proxy IP address #1. If the destination address of the connection between the access network device and the UPF network element is the proxy IP address #1 or the proxy IP address #2 instead of the IP address information of the server (refer to the descriptions of Case 2 in step S220), the N4 configuration request message may include the first address information. If the destination address of the connection between the access network device and the UPF network element is the proxy IP address #2, and the proxy IP address #1 and the proxy IP address #2 both are allocated by the SMF network element, the N4 configuration request message includes the proxy IP address #1 and the proxy IP address #2.

When the second address information meets Case 3 described in step S220, in other words, the second address information is the proxy IP address #3, where the proxy IP address #3 corresponds to the identifier information of the N3 tunnel, the N4 configuration request message may include the identifier information of the N3 tunnel. The N4 configuration request message may include the first address information. If the proxy IP address #3 is allocated by the SMF network element, the N4 configuration request message includes the proxy IP address #3.

It should be understood that address information in the N4 configuration request message may be used to forward the sensing data. The UPF network element may determine the sensing data based on the address information, and hide the IP address information of the access network device.

Optionally, in S223B, the UPF network element sends an N4 configuration response message to the SMF network element, and correspondingly, the SMF network element receives the N4 configuration response message from the UPF network element.

The N4 configuration response message is used to respond to the N4 configuration request message.

When the second address information meets Case 2 described in step S220, in other words, the second address information is the proxy IP address #1, where the proxy IP address #1 corresponds to the IP address information of the access network device, if the proxy IP address #1 is allocated by the UPF network element, the N4 configuration response message includes the proxy IP address #1.

When the second address information meets Case 3 described in step S220, in other words, the second address information is the proxy IP address #3, where the proxy IP address #3 corresponds to the identifier information of the N3 tunnel, if the proxy IP address #3 is allocated by the UPF network element, the N4 configuration response message includes the proxy IP address #3.

S224B: The SMF network element sends the second address information to the access network device in response to the first information #1, and correspondingly, the access network device receives, from the SMF network element, the second address information that is in response to the first information #1.

For example, the SMF network element sends an N3 tunnel establishment response message to the access network device in response to the N3 tunnel establishment request message, where the N3 tunnel establishment response message carries the second address information. Optionally, the SMF network element may alternatively send an N3 tunnel establishment response message to the access network device via the SMF network element.

Optionally, the N3 tunnel establishment response message further carries core network N3 tunnel identifier information.

In this way, in Manner B, the access network device requests the second address information from the SMF network element. The SMF network element may allocate the second address information to the access network device and return the second address information to the access network device, or the SMF network element may return, to the access network device, the second address information allocated by the UPF network element.

### Manner C:

Optionally, in S221C, the AMF network element determines the SMF network element.

For example, the AMF network element selects an appropriate SMF network element based on the location information, to enable a service area of the SMF network element to cover the sensing area.

S222C: The AMF network element sends first information #2 to the SMF network element, and correspondingly, the SMF network element receives the first information #2 from the AMF network element.

The first information #2 is used to request the second address information.

For example, the first information #2 is a sensing service requirement message. The SMF network element or the UPF network element allocates the second address information to the access network device based on the sensing service requirement message.

Optionally, the sensing service requirement message may further carry identifier information of the access network device. In other words, after selecting the access network device based on the location information, the AMF network element may send the identifier information of the access network device to the SMF network element, so that the SMF network element can establish the N3 tunnel between an access device and the SMF network element. Alternatively, the sensing service requirement message may not carry identifier information of the access network device. In this case, the SMF network element or the UPF network element may allocate the second address information, and the AMF network element sends the second address information to the selected access network device (refer to the descriptions of the following step S225C). Optionally, the sensing service requirement message (the first information #2) may include the sensing indication information. The sensing indication information indicates the sensing service, or the sensing indication information indicates that the established N3 tunnel is used for transmission of the sensing data. Optionally, the sensing service requirement message further includes the first address information, and the first address information is used by the UPF network element to forward the sensing data.

Optionally, in S223C, the SMF network element sends an N4 configuration request message to the UPF network element, and correspondingly, the UPF network element receives the N4 configuration request message from the SMF network element.

The N4 configuration request message is used to request to establish an N4 connection, and the N4 connection is used to manage and control the N3 tunnel.

Information that may be carried in the N4 configuration request message is similar to that described in step S222B. For brevity, details are not described herein again.

Optionally, in S224C, the UPF network element sends an N4 configuration response message to the SMF network element, and correspondingly, the SMF network element receives the N4 configuration response message from the UPF network element.

The N4 configuration response message is used to respond to the N4 configuration request message.

Information that may be carried in the N4 configuration response message is similar to that described in step S223B. For brevity, details are not described herein again.

S225C: The SMF network element sends the second address information to the access network device in response to first information #1, and correspondingly, the access network device receives, from the SMF network element, the second address information that is in response to the first information #1.

For example, the SMF network element sends an N3 tunnel establishment request message to the access network device, where the N3 tunnel establishment request message carries the second address information. The N3 tunnel establishment request message may further carry core network N3 tunnel identifier information. Optionally, the SMF network element sends the N3 tunnel establishment request message to the access network device via the AMF network element.

In a possible implementation, step S225C may be replaced with the following: The SMF network element sends the second address information to the AMF network element, the AMF network element determines the access network device, and the AMF network element sends the second address information to the access network device. In this case, that the AMF network element determines the access network device may be an action described in step S213. In other words, the AMF network element may determine the access network device when the access network device receives the first address information, or may determine the access network device when the access network device obtains the second address information. This is not particularly limited in this application.

Optionally, in S226C, the access network device sends access network device N3 tunnel identifier information to the SMF network element, and correspondingly, the SMF network element receives the access network device N3 tunnel identifier information from the access network device.

Optionally, in S227C, the SMF network element sends the access network device N3 tunnel identifier information to the UPF network element, and correspondingly, the UPF network element receives the access network device N3 tunnel identifier information from the SMF network element.

For example, the SMF network element sends the access network device N3 tunnel identifier information to the UPF network element based on a configured N4 tunnel, to forward the sensing data.

In this way, in Manner C, the AMF network element requests the second address information from the SMF network element. The SMF network element may allocate the second address information to the access network device and return the second address information to the access network device, or the SMF network element may return, to the access network device, the second address information allocated by the UPF network element.

The foregoing describes the manners of obtaining the second address information by the access network device.

With reference to FIG. 5, the following describes two manners of receiving the second address information by the application server. In Manner α, for step S230 in the method 200, steps S231α to S233α are performed. In Manner β, for step S230 in the method 200, steps S231β and S232β are performed.

### Manner α:

S231α: The access network device sends the second address information to the AMF network element, and correspondingly, the AMF network element receives the second address information from the access network device.

For example, the access network device sends an N2 configuration response message to the AMF network element in response to the N2 configuration request message (refer to step S214), where the N2 configuration response message carries the second address information.

S232α: The AMF network element sends the second address information to the NEF network element, and correspondingly, the NEF network element receives the second address information from the AMF network element.

For example, the AMF network element sends a sensing service response message to the NEF network element in response to the sensing service request message (refer to step S211), where the sensing service response message carries the second address information.

S233α: The NEF network element sends the second address information to the application server, and correspondingly, the application server receives the second address information from the NEF network element.

For example, the NEF network element sends the sensing service response message to the application server.

In this way, in Manner α, the application server receives the second address information from the access network device.

### Manner β:

S231β: The SMF network element sends the second address information to the NEF network element, and correspondingly, the NEF network element receives the second address information from the SMF network element.

For example, the SMF network element sends a sensing service response message to the NEF network element in response to the sensing service request message (refer to step S2122b or S2121c), where the sensing service response message carries the second address information.

Optionally, step S231β may be replaced with the following: The SMF network element sends the second address information to the AMF network element, and correspondingly, the AMF network element sends the second address information to the NEF network element. In other words, the SMF network element may send the second address information to the NEF network element via the AMF network element.

Alternatively, optionally, step S231β may be replaced with the following: The SMF network element sends the second address information to the PCF network element, and the PCF network element sends the second address information to the NEF network element. In other words, the SMF network element may send the second address information via the PCF network element.

S232β: The NEF network element sends the second address information to the application server, and correspondingly, the application server receives the second address information from the NEF network element.

For example, the NEF network element sends the sensing service response message to the application server.

In this way, in Manner β, the application server receives the second address information from the access network device.

In the method 200 provided in this embodiment of this application, the access network device and the application server exchange the address information of the access network device and the application server. The application server, the access network device, or the UPF network element may establish, based on the address information of the access network device and the application server, the communication connection used for transmission of the sensing data and/or the sensing requirement information. In addition, when the access network device establishes, based on the address information of the access network device and the application server, the communication connection used for transmission of the sensing data, the application server may receive the second address information of the access network device during the establishment of the connection. When the application server establishes, based on the address information of the access network device and the application server, the connection used for transmission of the sensing data, the access network device may receive the first address information of the application server during the establishment of the connection. That the address information is received during the establishment of the connection may indicate that the address information is not received through a control plane.

In a possible implementation, when the transmission of the sensing data between the access network device and the UPF network element is performed through the N3 tunnel, in other words, when the sensing data is not IP-encapsulated and then transmitted through the N3 tunnel, the access network device may not need to obtain the first address information and/or the second address information when the UPF network element or the application server establishes, between the UPF network element and the application server, a connection used for transmission of the sensing data. This is described in the following.

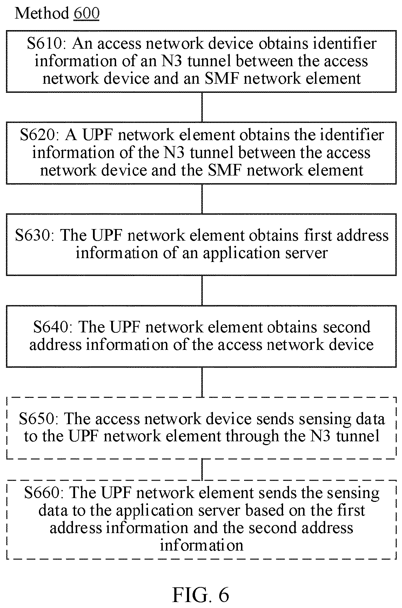

FIG. 6 is a schematic flowchart of an information transmission method 600 according to an embodiment of this application.

S610: An access network device obtains identifier information of an N3 tunnel between the access network device and an SMF/UPF network element, where the N3 tunnel is used for transmission of sensing data.

For example, the access network device may receive an N2 configuration request message from an AMF network element, where the N2 configuration sensing request message may be used to trigger the access network device to establish the N3 tunnel used for transmission of the sensing data. The access network device may send an N3 tunnel establishment request message to the SMF network element, and the SMF network element sends an N3 tunnel establishment response message to the access network device in response to the N3 tunnel establishment request message. The N3 tunnel establishment request message may carry access network device N3 tunnel identifier information, and the N3 tunnel establishment response message may carry core network N3 tunnel identifier information. The core network N3 tunnel identifier information in the N3 tunnel establishment response message may be allocated by the SMF network element, or may be allocated by the UPF network element. If the core network N3 tunnel identifier information is allocated by the UPF network element, the SMF network element may send an N4 configuration request message to the UPF network element, and the UPF network element includes the core network N3 tunnel identifier information in an N4 configuration response message that is in response to the N4 configuration request message. In addition, if the N3 tunnel establishment request message sent by the access network device does not carry the access network device N3 tunnel identifier information, the access network device may send an N3 tunnel establishment response acknowledgement message to the SMF network element after receiving the N3 tunnel establishment response message, and access network device N3 tunnel identifier information is carried in the N3 tunnel establishment response acknowledgement message.

Alternatively, for another example, an AMF network element may send a sensing service requirement message to the SMF network element, where the sensing service requirement message may trigger the SMF network element to establish the N3 tunnel used for transmission of the sensing data. The SMF network element may send an N3 tunnel establishment request message to the access network device, where the N3 tunnel establishment request message carries core network N3 tunnel identifier information. The core network N3 tunnel identifier information may be allocated by the SMF network element, or may be allocated by the UPF network element. If the core network N3 tunnel identifier information is allocated by the UPF network element, the SMF network element may send an N4 configuration request message to the UPF network element, and the UPF network element includes the core network N3 tunnel identifier information in an N4 configuration response message that is in response to the N4 configuration request message. The access network device may send an N3 tunnel establishment response message to the SMF network element after receiving the N3 tunnel establishment request message, where the N3 tunnel establishment response message carries access network device N3 tunnel identifier information.

S620: The UPF network element obtains the identifier information of the N3 tunnel between the access network device and the UPF network element.

For example, the SMF network element may send the N4 configuration request message to the UPF network element, where the N4 configuration request message is used to request to establish an N4 connection, and the N4 connection is used to manage and control the N3 tunnel. The core network N3 tunnel identifier information may be allocated by the SMF network element, or may be allocated by the UPF network element. If the core network N3 tunnel identifier information is allocated by the SMF network element, the N4 configuration request message may carry the core network N3 tunnel identifier information. If the core network N3 tunnel identifier information is allocated by the UPF network element, the UPF network element may allocate the core network N3 tunnel identifier information based on the N4 configuration request message, and send the N4 configuration response message to the SMF network element in response to the N4 configuration request message, where the N4 configuration response message carries the core network N3 tunnel identifier information. In addition, the N4 configuration request message sent by the SMF network element may further include the access network device N3 tunnel identifier information. If the N4 configuration request message does not include the access network device N3 tunnel identifier information, after obtaining the access network device N3 tunnel identifier information, the SMF network element may send the access network device N3 tunnel identifier information to the UPF network element.

S630: The UPF network element obtains first address information of an application server.

The first address information is used to forward the sensing data.

For example, the SMF network element may obtain the first address information of the application server, and the SMF network element sends the N4 configuration request message to the UPF network element, where the N4 configuration request message carries the first address information.

The SMF network element may receive the first address information from a PCF network element or a NEF network element. In this case, the access network device may not need to obtain the first address information. The SMF network element may alternatively receive the first address information from the access network device.

S640: The UPF network element obtains second address information of the access network device.

The second address information is proxy IP address information, and the proxy IP address information corresponds to the N3 tunnel identifier information.

The second address information may be allocated by the SMF network element, or may be allocated by the UPF network element. If the second address information is allocated by the SMF network element, the N4 configuration request message sent by the SMF network element to the UPF network element carries the second address information. If the second address information is allocated by the UPF network element, the UPF network element may allocate the second address information based on the N4 configuration request message sent by the SMF network element, and may send the N4 configuration response message in response to the N4 configuration request message, where the N4 configuration response message carries the second address information.

S650: The access network device sends the sensing data to the UPF network element through the N3 tunnel, and correspondingly, the UPF network element receives, from the access network device, the sensing data through the N3 tunnel.

The N3 tunnel is used for transmission of the sensing data. The UPF network element receives the sensing data sent through the N3 tunnel, and learns, based on a correspondence between the N3 tunnel identifier information and the first address information of the application server, that the sensing data needs to be sent to the application server. Then, a communication connection based on the first address information and the second address information may be established between the UPF network element and the application server, in other words, the UPF network element and the application server may communicate with each other based on the first address information and the second address information.

S660: The UPF network element sends the sensing data to the application server based on the first address information and the second address information, and correspondingly, the application server receives the sensing data from the UPF network element.

For example, the UPF network element may send the sensing data to the application server through the communication connection that is between the UPF network element and the application server and that is based on the address information.

In this way, in this embodiment of this application, the transmission of the sensing data between the access network device and the application server may be performed by hiding IP address information and network topology information of the access network device via the UPF network element, so that the IP address information and the network topology information of the RAN are not exposed. This improves security of information transmission in a system.

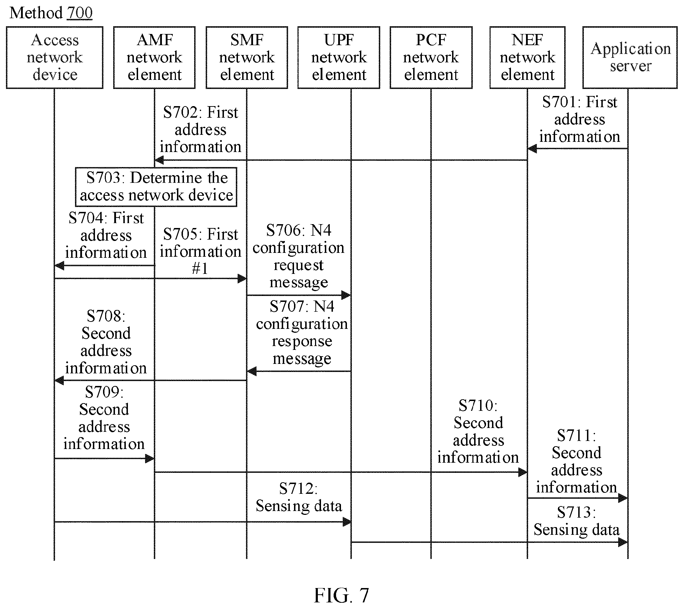

FIG. 7 is a schematic flowchart of an information transmission method 700 according to an embodiment of this application. The method 700 may be an implementation of the method 200.

S701: An application server sends first address information to a NEF network element, and correspondingly, the NEF network element receives the first address information from the application server.

For this step, refer to the descriptions of step S211 in the method 200. Details are not described herein again.

S702: The NEF network element sends the first address information to an AMF network element, and correspondingly, the AMF network element receives the first address information from the NEF network element.

For this step, refer to the descriptions of step S212a in the method 200. Details are not described herein again.

S703: The AMF network element determines an access network device.

For this step, refer to the descriptions of step S213 in the method 200. Details are not described herein again.

S704: The AMF network element sends the first address information to the access network device, and correspondingly, the access network device receives the first address information from the AMF network element.

For this step, refer to the descriptions of step S214 in the method 200. Details are not described herein again.

S705: The access network device sends first information #1 to an SMF network element, and correspondingly, the SMF network element receives the first information #1 from the access network device.

For this step, refer to the descriptions of step S221B in the method 200. Details are not described herein again.

S706: The SMF network element sends an N4 configuration request message to a UPF network element, and correspondingly, the UPF network element receives the N4 configuration request message from the SMF network element.

For this step, refer to the descriptions of step S222B in the method 200. Details are not described herein again.

S707: The UPF network element sends an N4 configuration response message to the SMF network element, and correspondingly, the SMF network element receives the N4 configuration response message from the UPF network element.

For this step, refer to the descriptions of step S223B in the method 200. Details are not described herein again.

S708: The SMF network element sends second address information to the access network device, and correspondingly, the access network device receives the second address information from the SMF network element.

For this step, refer to the descriptions of step S224B in the method 200. Details are not described herein again.

S709: The access network device sends the second address information to the AMF network element, and correspondingly, the AMF network element receives the second address information from the access network device.

For this step, refer to the descriptions of step S231α in the method 200. Details are not described herein again.

S710: The AMF network element sends the second address information to the NEF network element, and correspondingly, the NEF network element receives the second address information from the AMF network element.

For this step, refer to the descriptions of step S232α in the method 200. Details are not described herein again.

S711: The NEF network element sends the second address information to the application server, and correspondingly, the application server receives the second address information from the NEF network element.

For this step, refer to the descriptions of step S233α in the method 200. Details are not described herein again.

S712: The access network device sends sensing data to the UPF network element, and correspondingly, the UPF network element receives the sensing data from the access network device.

For this step, refer to the descriptions of step S240 in the method 200. Details are not described herein again.

S713: The UPF network element sends the sensing data to the application server, and correspondingly, the application server receives the sensing data from the UPF network element.

For this step, refer to the descriptions of step S240 in the method 200. Details are not described herein again.

In this way, in this embodiment of this application, the access network device and the application server may implement communication based on the address information of the access network device and the address information of the application server. This improves transmission efficiency of the sensing data.

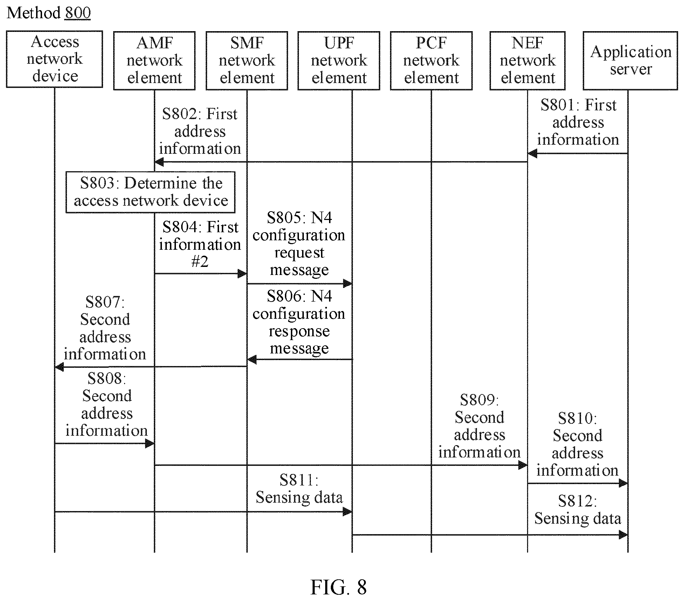

FIG. 8 is a schematic flowchart of an information transmission method 800 according to an embodiment of this application. The method 800 may be an implementation of the method 200.

S801: An application server sends first address information to a NEF network element, and correspondingly, the NEF network element receives the first address information from the application server.

For this step, refer to the descriptions of step S211 in the method 200. Details are not described herein again.

S802: The NEF network element sends the first address information to an AMF network element, and correspondingly, the AMF network element receives the first address information from the NEF network element.

For this step, refer to the descriptions of step S212a in the method 200. Details are not described herein again.

S803: The AMF network element determines an access network device.

This step may alternatively be performed in step S807, and reference may be made to the descriptions of step S213 in the method 200. Details are not described herein again.

S804: The AMF network element sends first information #2 to an SMF network element, and correspondingly, the SMF network element receives the first information #2 from the AMF network element.

For this step, refer to the descriptions of step S222C in the method 200. Details are not described herein again.

S805: The SMF network element sends an N4 configuration request message to a UPF network element, and correspondingly, the UPF network element receives the N4 configuration request message from the SMF network element.

For this step, refer to the descriptions of step S223C in the method 200. Details are not described herein again.

S806: The UPF network element sends an N4 configuration response message to the SMF network element, and correspondingly, the SMF network element receives the N4 configuration response message from the UPF network element.

For this step, refer to the descriptions of step S224C in the method 200. Details are not described herein again.

S807: The SMF network element sends second address information to the access network device, and correspondingly, the access network device receives the second address information from the SMF network element.

Alternatively, this step may be replaced with the following: The SMF network element sends the second address information to the AMF network element, the AMF network element determines the access network device, and the AMF network element sends the second address information to the access network device. For this step, refer to the descriptions of step S225C in the method 200. Details are not described herein again.

S808: The access network device sends the second address information to the AMF network element, and correspondingly, the AMF network element receives the second address information from the access network device.

For this step, refer to the descriptions of step S231α in the method 200. Details are not described herein again.

S809: The AMF network element sends the second address information to the NEF network element, and correspondingly, the NEF network element receives the second address information from the AMF network element.

For this step, refer to the descriptions of step S232α in the method 200. Details are not described herein again.

S808 and S809 may be replaced with the following: The SMF network element sends the second address information to the NEF network element, and correspondingly, the NEF network element receives the second address information from the SMF network element. Alternatively, S808 and S809 may be replaced with the following: The SMF network element sends the second address information to the AMF network element, and correspondingly, the AMF network element sends the second address information to the NEF network element. Alternatively, S808 and S809 may be replaced with the following: The SMF network element sends the second address information to a PCF network element, and the PCF network element sends the second address information to the NEF network element. For this step, refer to the descriptions of step S231β in the method 200. Details are not described herein again.

S810: The NEF network element sends the second address information to the application server, and correspondingly, the application server receives the second address information from the NEF network element.

For this step, refer to the descriptions of step S233α or S232β in the method 200. Details are not described herein again.

S811: The access network device sends sensing data to the UPF network element, and correspondingly, the UPF network element receives the sensing data from the access network device.

For this step, refer to the descriptions of step S240 in the method 200. Details are not described herein again.

S812: The UPF network element sends the sensing data to the application server, and correspondingly, the application server receives the sensing data from the UPF network element.

For this step, refer to the descriptions of step S240 in the method 200. Details are not described herein again.

In this way, in this embodiment of this application, the access network device and the application server may establish a connection based on the address information of the access network device and the address information of the application server, to implement communication. This improves transmission efficiency of the sensing data.

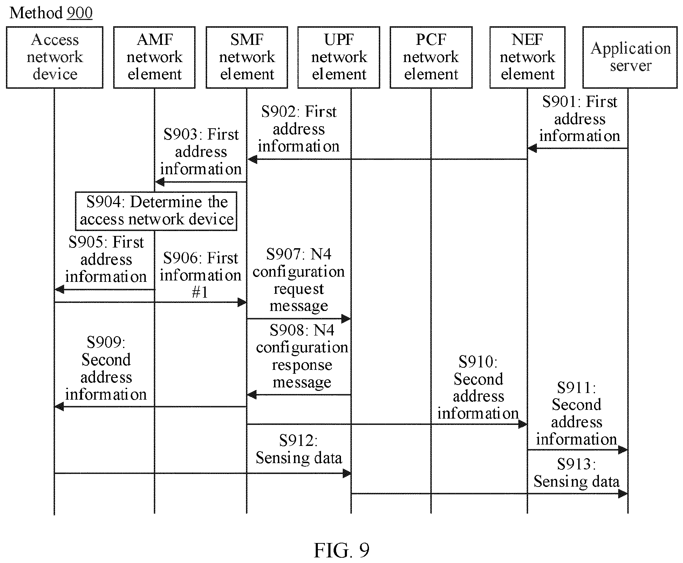

FIG. 9 is a schematic flowchart of an information transmission method 900 according to an embodiment of this application. The method 900 may be an implementation of the method 600.

S901: An application server sends first address information to a NEF network element, and correspondingly, the NEF network element receives the first address information from the application server.

For this step, refer to the descriptions of step S211 in the method 200. Details are not described herein again.

S902: The NEF network element sends the first address information to an SMF network element, and correspondingly, the SMF network element receives the first address information from the NEF network element.

For this step, refer to the descriptions of step S211c in the method 200. Details are not described herein again.

Alternatively, the NEF sends the first address information to a PCF network element, and the PCF network element sends the first address information to an SMF network element. For this step, refer to the descriptions of steps S2121b and S2122b in the method 200. Details are not described herein again.

S903: The SMF network element sends the first address information to an AMF network element, and correspondingly, the AMF network element receives the first address information from the SMF network element.

For this step, refer to the descriptions of step S2123b or S2122c in the method 200. Details are not described herein again.

S904: The AMF network element determines an access network device.

For this step, refer to the descriptions of step S213 in the method 200. Details are not described herein again.

S905: The AMF network element sends the first address information to the access network device, and correspondingly, the access network device receives the first address information from the AMF network element.

For this step, refer to the descriptions of step S214 in the method 200. Details are not described herein again.

S906: The access network device sends first information to the SMF network element, and correspondingly, the SMF network element receives the first information from the access network device.

For this step, refer to the descriptions of step S221B in the method 200. Details are not described herein again.

S907: The SMF network element sends an N4 configuration request message to a UPF network element, and correspondingly, the UPF network element receives the N4 configuration request message from the SMF network element.

For this step, refer to the descriptions of step S222B in the method 200. Details are not described herein again.

S908: The UPF network element sends an N4 configuration response message to the SMF network element, and correspondingly, the SMF network element receives the N4 configuration response message from the UPF network element.

For this step, refer to the descriptions of step S223B in the method 200. Details are not described herein again.

S909: The SMF network element sends second address information to the access network device, and correspondingly, the access network device receives the second address information from the SMF network element.

For this step, refer to the descriptions of step S224B in the method 200. Details are not described herein again.

S910: The SMF network element sends the second address information to the NEF network element, and correspondingly, the NEF network element receives the second address information from the SMF network element.

For this step, refer to the descriptions of step S231β in the method 200. Details are not described herein again.

Alternatively, S910 may be replaced with the following: The access network device sends the second address information to the AMF network element, and the AMF network element sends the second address information to the NEF network element. For this step, refer to the descriptions of steps S231α and S232α in the method 200. Details are not described herein again.

S911: The NEF network element sends the second address information to the application server, and correspondingly, the application server receives the second address information from the NEF network element.

For this step, refer to the descriptions of steps S233α and S232β in the method 200. Details are not described herein again.

S912: The access network device sends sensing data to the UPF network element, and correspondingly, the UPF network element receives the sensing data from the access network device.

For this step, refer to the descriptions of step S240 in the method 200. Details are not described herein again.

S913: The UPF network element sends the sensing data to the application server, and correspondingly, the application server receives the sensing data from the UPF network element.

For this step, refer to the descriptions of step S240 in the method 200. Details are not described herein again.

In this way, in this embodiment of this application, the access network device and the application server may establish a connection based on the address information of the access network device and the address information of the application server, to implement communication. This improves transmission efficiency of the sensing data.

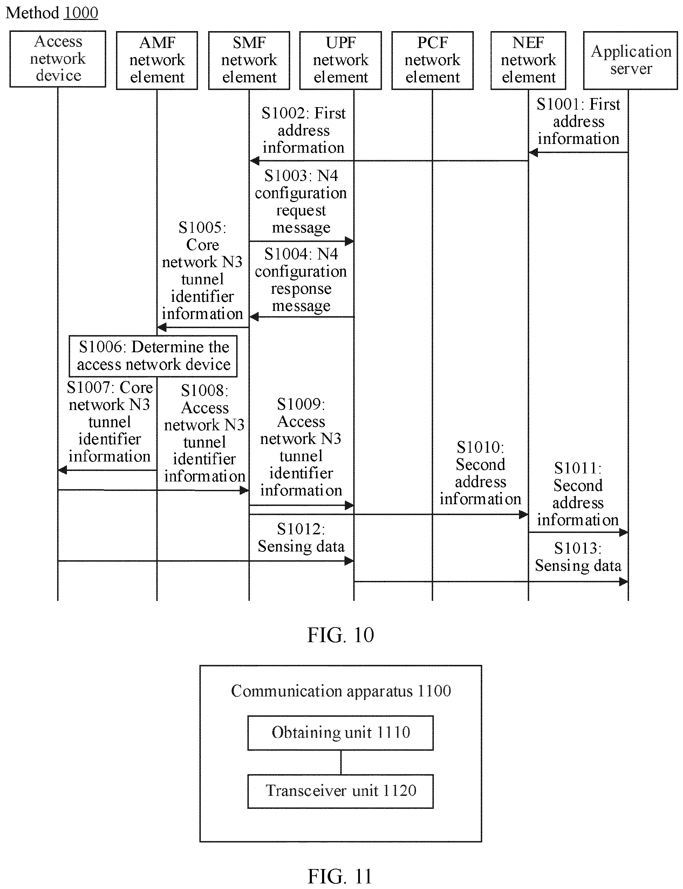

FIG. 10 is a schematic flowchart of an information transmission method 1000 according to an embodiment of this application. The method 1000 may be an implementation of a method 200. Some steps of the method 200 may be referenced by the method 1000.

S1001: An application server sends first address information to a NEF network element, and correspondingly, the NEF network element receives the first address information from the application server.

For this step, refer to the descriptions of step S211 in the method 200. Details are not described herein again.

S1002: The NEF network element sends the first address information to an SMF network element, and correspondingly, the SMF network element receives the first address information from the NEF network element.

For this step, refer to the descriptions of step S211c in the method 200. Details are not described herein again.

Alternatively, the NEF sends the first address information to a PCF network element, and the PCF network element sends the first address information to an SMF network element. For this step, refer to the descriptions of steps S2121b and S2122b in the method 200. Details are not described herein again.

S1003: The SMF network element sends an N4 configuration request message to a UPF network element, and correspondingly, the UPF network element receives the N4 configuration request message from the SMF network element.

The N4 configuration request message carries the first address information.

If second address information of an access network device is allocated by the SMF network element, the N4 configuration request message further carries the second address information, and the second address information corresponds to identifier information of an N3 tunnel.

If core network N3 tunnel identifier information is allocated by the SMF network element, the N4 configuration request message further carries the core network N3 tunnel identifier information.

S1004: The UPF network element sends an N4 configuration response message to the SMF network element, and correspondingly, the SMF network element receives the N4 configuration response message from the UPF network element.

If the second address information of the access network device is allocated by the UPF network element, the N4 configuration response message further carries the second address information.

If the core network N3 tunnel identifier information is allocated by the UPF network element, the N4 configuration response message further carries the core network N3 tunnel identifier information.

S1005: The SMF network element sends the core network N3 tunnel identifier information to an AMF network element, and correspondingly, the AMF network element receives the core network N3 tunnel identifier information from the SMF network element.

For example, the SMF network element may send an N3 tunnel establishment response message to the AMF network element, where the N3 tunnel establishment response message carries the core network N3 tunnel identifier information. The core network N3 tunnel identifier information may be allocated by the SMF network element, or may be allocated by the UPF network element.

For this step, refer to the descriptions of step S2123b or S2122c in the method 200. Details are not described herein again.

S1006: The AMF network element determines the access network device.

For this step, refer to the descriptions of step S213 or S225C in the method 200. Details are not described herein again.

S1007: The AMF network element sends the core network N3 tunnel identifier information to the access network device, and correspondingly, the access network device receives the core network N3 tunnel identifier information from the AMF network element.

For example, the AMF network element may send the N3 tunnel establishment response message to the SMF network element.

S1008: The access network device sends access network N3 tunnel identifier information to the SMF network element, and correspondingly, the SMF network element receives the access network N3 tunnel identifier information from the access network device.

For example, the access network device may send the N3 tunnel establishment response message to the SMF network element after receiving an N3 tunnel establishment request message, where the N3 tunnel establishment response message carries access network device N3 tunnel identifier information.

S1009: The SMF network element sends the access network N3 tunnel identifier information to the UPF network element, and correspondingly, the UPF network element receives the access network N3 tunnel identifier information from the SMF network element.

S1010: The SMF network element sends the second address information to the NEF network element, and correspondingly, the NEF network element receives the second address information from the SMF network element.

For this step, refer to the descriptions of step S231β in the method 200. Details are not described herein again.

S1011: The NEF network element sends the second address information to the application server, and correspondingly, the application server receives the second address information from the NEF network element.

For this step, refer to the descriptions of step S232β in the method 200. Details are not described herein again.

S1012: The access network device sends sensing data to the UPF network element, and correspondingly, the UPF network element receives the sensing data from the access network device.

For this step, refer to the descriptions of step S650 in the method 600. Details are not described herein again.

S1013: The UPF network element sends the sensing data to the application server, and correspondingly, the application server receives the sensing data from the UPF network element.

For this step, refer to the descriptions of step S660 in the method 600. Details are not described herein again.

In this way, in this embodiment of this application, the transmission of the sensing data between the access network device and the application server may be performed by hiding IP address information and network topology information of the access network device via the UPF network element, so that the IP address information and the network topology information of the access network device are not exposed. This improves security of information transmission in a system.

It should be noted that the method 700 to the method 1000 are some implementations of the method 200 and the method 600, and there are other implementations of the method 200 and the method 600. For brevity, details are not described herein again.

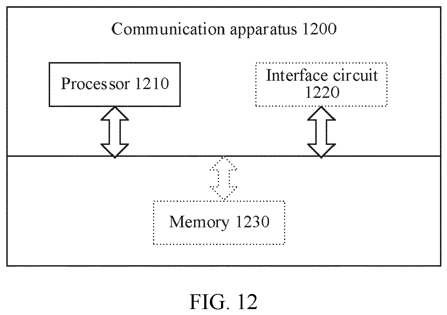

FIG. 11 and FIG. 12 each are a diagram of a structure of a possible communication apparatus according to an embodiment of this application. These communication apparatuses may be configured to implement functions of the access network device, the SMF network element, the UPF network element, the application server, and the AMF network element in the foregoing method embodiments, and therefore can also achieve beneficial effects of the foregoing method embodiments. In embodiments of this application, the communication apparatus may be the access network device, the SMF network element, the UPF network element, the application server, or the AMF network element, or may be a module (for example, a chip) in the access network device, the SMF network element, the UPF network element, the application server, or the AMF network element.

As shown in FIG. 11, a communication apparatus 1100 includes an obtaining unit 1110 and a transceiver unit 1120. The communication apparatus 1100 is configured to implement functions of the access network device in the method embodiments shown in FIG. 2 to FIG. 10. Alternatively, a communication apparatus 400 may include a module configured to implement any function or operation of the access network device in the method embodiments shown in FIG. 2 to FIG. 10. The module may be completely or partially implemented by using software, hardware, firmware, or any combination thereof.

When the communication apparatus 1100 is configured to implement the functions of the access network device in the method embodiments shown in FIG. 2 to FIG. 5, the transceiver unit 1120 is configured to receive first address information of an application server, and the access network device is configured to generate sensing data. The obtaining unit 1110 is configured to obtain second address information of the access network device. The first address information and the second address information are used for transmission of the sensing data.

In this way, in this embodiment of this application, the access network device and the application server may establish a connection based on the address information of the access network device and the address information of the application server, to implement communication. This can implement effective information transmission in a sensing system.

When the communication apparatus 1100 is configured to implement the functions of the SMF network element in the method embodiments shown in FIG. 2 to FIG. 5, the obtaining unit 1110 is configured to obtain second address information of an access network device, where the second address information is proxy internet protocol IP address information. The proxy IP address information corresponds to IP address information of the access network device, where the IP address information is used for transmission of sensing data. Alternatively, the proxy IP address information corresponds to identifier information of an N3 tunnel between the access network device and the UPF network element, where the N3 tunnel is used for transmission of sensing data, and the access network device is configured to generate the sensing data. The transceiver unit 1120 is configured to send the second address information to a user plane function UPF network element, where the second address information is used to forward the sensing data.

In this way, in this embodiment of this application, the access network device and the application server may establish a connection based on the address information of the access network device and the address information of the application server, to implement communication. This can implement effective information transmission in a sensing system.

When the communication apparatus 1100 is configured to implement the functions of the UPF network element in the method embodiments shown in FIG. 2 to FIG. 5, the obtaining unit 1110 is configured to obtain second address information of an access network device, where the second address information is proxy internet protocol IP address information. The proxy IP address information corresponds to IP address information of the access network device, where the IP address information is used for transmission of sensing data. Alternatively, the proxy IP address information corresponds to identifier information of an N3 tunnel between the access network device and a UPF network element, where the N3 tunnel is used for transmission of sensing data, and the access network device is configured to generate the sensing data. The transceiver unit 1120 is configured to forward the sensing data based on the second address information.

In this way, in this embodiment of this application, the access network device and the application server may establish a connection based on the address information of the access network device and the address information of the application server, to implement communication. This can implement effective information transmission in a sensing system.

When the communication apparatus 1100 is configured to implement the functions of the application server in the method embodiments shown in FIG. 2 to FIG. 5, the obtaining unit 1110 is configured to obtain first address information. The transceiver unit 1120 is configured to send the first address information of the application server. The transceiver unit is further configured to receive second address information of an access network device, where the access network device is configured to generate sensing data. The first address information and the second address information are used for transmission of the sensing data.

In this way, in this embodiment of this application, the access network device and the application server may establish a connection based on the address information of the access network device and the address information of the application server, to implement communication. This can implement effective information transmission in a sensing system.

When the communication apparatus 1100 is configured to implement the functions of the AMF network element in the method embodiments shown in FIG. 2 to FIG. 5, the transceiver unit 1120 is configured to receive first address information of an application server. The obtaining unit 1110 is configured to obtain first information. The transceiver unit 1120 is further configured to send the first information to an SMF network element, where the first information is used to request second address information of an access network device, the access network device is configured to generate sensing data, and the first address information and the second address information are used for transmission of the sensing data. The transceiver unit 1120 is further configured to send the first address information to the access network device.

In this way, in this embodiment of this application, the access network device and the application server may establish a connection based on the address information of the access network device and the address information of the application server, to implement communication. This can implement effective information transmission in a sensing system.

When the communication apparatus 1100 is configured to implement the function of the access network device in the method embodiment shown in FIG. 6, the obtaining unit 1110 is configured to obtain identifier information of an N3 tunnel between the access network device and a user plane function network element, where the N3 tunnel is used for transmission of sensing data. The transceiver unit 1120 is configured to send the sensing data through the N3 tunnel.

In this way, in this embodiment of this application, the transmission of the sensing data between the access network device and an application server may be performed by hiding IP address information and network topology information of the access network device via the UPF network element, so that the IP address information and the network topology information of the RAN are not exposed. This improves security of information transmission in a sensing system.

For more detailed descriptions of the obtaining unit 1110 and the transceiver unit 1120, directly refer to the related descriptions in the method embodiments shown in FIG. 2 to FIG. 5. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1130 for storing instructions executed by the processor 1210, input data needed by the processor 1210 to run the instructions, or data generated after the processor 1210 runs the instructions.

When the communication apparatus 1200 is configured to implement the method shown in FIG. 2 to FIG. 6, the processor 1210 is configured to implement a function of the obtaining unit 1110, and the interface circuit 1220 is configured to implement a function of a transceiver unit 1120 or functions of the transceiver unit 1120 and the obtaining unit 1110.

When the foregoing communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by another network element to the access network device. Alternatively, the chip in the access network device sends information to another module (for example, a radio frequency module or an antenna) in another network element, where the information is sent by the access network device to the another network element.

When the foregoing communication apparatus is a chip used in an SMF network element, the chip in the SMF network element implements a function of the SMF network element in the foregoing method embodiments. The chip in the SMF network element receives information from another module (for example, a radio frequency module or an antenna) in the SMF network element, where the information is sent by another network element to the SMF network element. Alternatively, the chip in the SMF network element sends information to another module (for example, a radio frequency module or an antenna) in another network element, where the information is sent by the SMF network element to the another network element.

When the foregoing communication apparatus is a chip used in a UPF network element, the chip in the UPF network element implements a function of the UPF network element in the foregoing method embodiments. The chip in the UPF network element receives information from another module (for example, a radio frequency module or an antenna) in the UPF network element, where the information is sent by another network element to the UPF network element. Alternatively, the chip in the UPF network element sends information to another module (for example, a radio frequency module or an antenna) in another network element, where the information is sent by the UPF network element to the another network element.

When the foregoing communication apparatus is a chip used in an application server, the chip in the application server implements a function of the application server in the foregoing method embodiments. The chip in the application server receives information from another module (for example, a radio frequency module or an antenna) in the application server, where the information is sent by another network element to the application server. Alternatively, the chip in the application server sends information to another module (for example, a radio frequency module or an antenna) in another network element, where the information is sent by the application server to the another network element.

When the foregoing communication apparatus is a chip used in an access management function network element, the chip in the access management function network element implements a function of the access management function network element in the foregoing method embodiments. The chip in the access management function network element receives information from another module (for example, a radio frequency module or an antenna) in the access management function network element, where the information is sent by another network element to the access management function network element. Alternatively, the chip in the access management function network element sends information to another module (for example, a radio frequency module or an antenna) in another network element, where the information is sent by the access management function network element to the another network element.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or instructions may be stored in a computer-readable storage medium, or transmission of the computer programs or instructions may be performed through the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state disk (solid state disk, SSD).

## Claims

1. An information transmission method, wherein the method comprises:
receiving (S210), by an access network device, first address information of an application server, wherein the access network device is configured to generate sensing data;
obtaining (S220), by the access network device, second address information of the access network device, wherein the first address information and the second address information are used to establish a communication connection between the access network device and the application server that is used for transmission of the sensing data; and
sending (S240), by the access network device, the sensing data to the application server using the communication connection.

2. The method according to claim 1, wherein the second address information is internet protocol IP address information of the access network device, and the IP address information is used for transmission of the sensing data.

3. The method according to claim 1, wherein the second address information is proxy IP address information, the proxy IP address information corresponds to IP address information of the access network device, and the IP address information is used for transmission of the sensing data.

4. The method according to claim 1, wherein the second address information is proxy IP address information, the proxy IP address information corresponds to identifier information of a tunnel between the access network device and a user plane function network element, and the tunnel is used for transmission of the sensing data.

5. The method according to any one of claims 1 to 4, wherein the obtaining (S220), by the access network device, second address information comprises:
receiving, by the access network device, the second address information from a session management function network element.

6. The method according to claim 5, wherein the method further comprises:
sending, by the access network device, first information to the session management function network element, wherein the first information is used to request the second address information of the access network device; and
the receiving, by the access network device, the second address information from a session management function network element comprises:
receiving, by the access network device from the session management function network element, the second address information that is in response to the first information.

7. The method according to claim 6 as dependent via claim 4, wherein the first information comprises the identifier information of the tunnel between the access network device and the user plane function network element, and the tunnel is used for transmission of the sensing data;
the first information comprises the first address information;
the first information comprises the first address information and the IP address information of the access network device, wherein the IP address information is used for transmission of the sensing data; or
the first information comprises the first address information and the identifier information of the tunnel.

8. An information transmission method, wherein the method comprises:
sending (S210), by an application server, first address information of the application server;
receiving (S230), by the application server, second address information of an access network device, wherein the access network device is configured to generate sensing data, and the first address information and the second address information are used to establish a communication connection between the access network device and the application server that is used for transmission of the sensing data; and
receiving (S240), by the application server, the sensing data from the access network device using the communication connection.

9. The method according to claim 8, wherein the second address information is internet protocol IP address information of the access network device.

10. The method according to claim 8, wherein the second address information is proxy IP address information, the proxy IP address information corresponds to IP address information of the access network device, and the IP address information is used for transmission of the sensing data.

11. The method according to any one of claims 8-10, wherein the second address information is proxy IP address information, the proxy IP address information corresponds to identifier information of a tunnel between the access network device and a user plane function network element, and the tunnel is used for transmission of the sensing data.

12. An information transmission apparatus, comprising: a unit configured to perform the method according to any one of claims 1 to 7 or the method according to any one of claims 8 to 11.

13. A computer-readable storage medium, comprising: a computer program, wherein when the computer program is run on a computer, the computer is enabled to perform the method according to any one of claims 1 to 7 or the method according to any one of claims 8 to 11.

14. A computer program product, wherein when the computer program product runs on a computer, the computer is enabled to perform the method according to any one of claims 1 to 7 or the method according to any one of claims 8 to 11.

15. A chip system, comprising a processor, configured to invoke a computer program from a memory and run the computer program, to enable a communication device on which the chip system is installed to perform the method according to any one of claims 1 to 7 or the method according to any one of claims 8 to 11.

## Patentansprüche

1. Informationsübertragungsverfahren, wobei das Verfahren umfasst:
Empfangen (S210), in einer Zugangsnetzwerkvorrichtung, von ersten Adressinformationen eines Anwendungsservers, wobei die Zugangsnetzwerkvorrichtung konfiguriert ist zum Erzeugen von Messdaten;
Erhalten (S220), in der Zugangsnetzwerkvorrichtung, von zweiten Adressinformationen der Zugangsnetzwerkvorrichtung, wobei die ersten Adressinformationen und die zweiten Adressinformationen verwendet werden, um zwischen der Zugangsnetzwerkvorrichtung und dem Anwendungsserver eine Kommunikationsverbindung einzurichten, die für eine Übertragung der Messdaten verwendet wird; und
Senden (S240) der Messdaten von der Zugangsnetzwerkvorrichtung an den Anwendungsserver unter Verwendung der Kommunikationsverbindung.

2. Verfahren nach Anspruch 1, wobei die zweiten Adressinformationen Internetprotokoll-Adressinformationen, IP-Adressinformationen, der Zugangsnetzwerkvorrichtung sind und wobei die IP-Adressinformationen für eine Übertragung der Messdaten verwendet werden.

3. Verfahren nach Anspruch 1, wobei die zweiten Adressinformationen Proxy-IP-Adressinformationen sind, wobei die Proxy-IP-Adressinformationen den IP-Adressinformationen der Zugangsnetzwerkvorrichtung entsprechen und wobei die IP-Adressinformationen für eine Übertragung der Messdaten verwendet werden.

4. Verfahren nach Anspruch 1, wobei die zweiten Adressinformationen Proxy-IP-Adressinformationen sind, wobei die Proxy-IP-Adressinformationen den Kennungsinformationen eines Tunnels zwischen der Zugangsnetzwerkvorrichtung und einem Netzwerkelement für eine Benutzerebenenfunktion entsprechen und wobei der Tunnel für eine Übertragung der Messdaten verwendet wird.

5. Verfahren nach einem der Ansprüche 1 bis 4, wobei das Erhalten (S220), in der Zugangsnetzwerkvorrichtung, der zweiten Adressinformationen umfasst:
Empfangen, in der Zugangsnetzwerkvorrichtung, der zweiten Adressinformationen von einem Netzwerkelement für eine Sitzungsverwaltungsfunktion.

6. Verfahren nach Anspruch 5, wobei das Verfahren ferner umfasst:
Senden von ersten Informationen von der Zugangsnetzwerkvorrichtung an das Netzwerkelement für eine Sitzungsverwaltungsfunktion, wobei die ersten Informationen verwendet werden, um die zweiten Adressinformationen der Zugangsnetzwerkvorrichtung anzufordern; und
wobei das Empfangen, in der Zugangsnetzwerkvorrichtung, der zweiten Adressinformationen von einem Netzwerkelement für eine Sitzungsverwaltungsfunktion umfasst:
Empfangen, in der Zugangsnetzwerkvorrichtung von dem Netzwerkelement für eine Sitzungsverwaltungsfunktion, der zweiten Adressinformationen als Reaktion auf die ersten Informationen.

7. Verfahren nach Anspruch 6 in Abhängigkeit von Anspruch 4, wobei die ersten Informationen die Kennungsinformationen des Tunnels zwischen der Zugangsnetzwerkvorrichtung und dem Netzwerkelement für eine Benutzerebenenfunktion umfassen und wobei der Tunnel für eine Übertragung der Messdaten verwendet wird;
wobei die ersten Informationen die ersten Adressinformationen umfassen;
wobei die ersten Informationen die ersten Adressinformationen und die IP-Adressinformationen der Zugangsnetzwerkvorrichtung umfassen, wobei die IP-Adressinformationen für eine Übertragung der Messdaten verwendet werden; oder
wobei die ersten Informationen die ersten Adressinformationen und die Kennungsinformationen des Tunnels umfassen.

8. Informationsübertragungsverfahren, wobei das Verfahren umfasst:
Senden (S210), von einem Anwendungsserver, von ersten Adressinformationen des Anwendungsservers;
Empfangen (S230), in dem Anwendungsserver, von zweiten Adressinformationen einer Zugangsnetzwerkvorrichtung, wobei die Zugangsnetzwerkvorrichtung konfiguriert ist zum Erzeugen von Messdaten, und wobei die ersten Adressinformationen und die zweiten Adressinformationen verwendet werden, um zwischen der Zugangsnetzwerkvorrichtung und dem Anwendungsserver eine Kommunikationsverbindung einzurichten, die für eine Übertragung der Messdaten verwendet wird; und
Empfangen (S240), in dem Anwendungsserver, der Messdaten von der Zugangsnetzwerkvorrichtung unter Verwendung der Kommunikationsverbindung.

9. Verfahren nach Anspruch 8, wobei die zweiten Adressinformationen Internetprotokoll-Adressinformationen, IP-Adressinformationen, der Zugangsnetzwerkvorrichtung sind.

10. Verfahren nach Anspruch 8, wobei die zweiten Adressinformationen Proxy-IP-Adressinformationen sind, wobei die Proxy-IP-Adressinformationen den IP-Adressinformationen der Zugangsnetzwerkvorrichtung entsprechen und wobei die IP-Adressinformationen für eine Übertragung der Messdaten verwendet werden.

11. Verfahren nach einem der Ansprüche 8 bis 10, wobei die zweiten Adressinformationen Proxy-IP-Adressinformationen sind, wobei die Proxy-IP-Adressinformationen den Kennungsinformationen eines Tunnels zwischen der Zugangsnetzwerkvorrichtung und einem Netzwerkelement für eine Benutzerebenenfunktion entsprechen und wobei der Tunnel für eine Übertragung der Messdaten verwendet wird.

12. Informationsübertragungsvorrichtung, umfassend: eine Einheit, die konfiguriert ist zum Durchführen des Verfahrens nach einem der Ansprüche 1 bis 7 oder des Verfahrens nach einem der Ansprüche 8 bis 11.

13. Computerlesbares Speichermedium umfassend: ein Computerprogramm, wobei, wenn das Computerprogramm in einem Computer ausgeführt wird, der Computer aktiviert wird, um das Verfahren nach einem der Ansprüche 1 bis 7 oder das Verfahren nach einem der Ansprüche 8 bis 11 durchzuführen.

14. Computerprogrammprodukt, wobei, wenn das Computerprogrammprodukt in einem Computer ausgeführt wird, der Computer aktiviert wird, um das Verfahren nach einem der Ansprüche 1 bis 7 oder das Verfahren nach einem der Ansprüche 8 bis 11 durchzuführen.

15. Chipsystem, das einen Prozessor umfasst, der konfiguriert ist zum Aufrufen eines Computerprogramms aus einem Speicher und zum Ausführen des Computerprogramms, um eine Kommunikationsvorrichtung, in der das Chipsystem installiert ist, zu aktivieren, um das Verfahren nach einem der Ansprüche 1 bis 7 oder das Verfahren nach einem der Ansprüche 8 bis 11 durchzuführen.

## Revendications

1. Procédé de transmission d'informations, dans lequel le procédé comprend :
la réception (S210), par un dispositif de réseau d'accès, de premières informations d'adresse d'un serveur d'application, le dispositif de réseau d'accès étant configuré pour générer des données de détection ;
l'obtention (S220), par le dispositif de réseau d'accès, de deuxièmes informations d'adresse du dispositif de réseau d'accès, les premières informations d'adresse et les deuxièmes informations d'adresse étant utilisées pour établir une connexion de communication entre le dispositif de réseau d'accès et le serveur d'application qui est utilisée pour la transmission des données de détection ; et
l'envoi (S240), par le dispositif de réseau d'accès, des données de détection au serveur d'application à l'aide de la connexion de communication.

2. Procédé selon la revendication 1, dans lequel les deuxièmes informations d'adresse sont des informations d'adresse de protocole Internet IP du dispositif de réseau d'accès, et les informations d'adresse IP sont utilisées pour la transmission des données de détection.

3. Procédé selon la revendication 1, dans lequel les deuxièmes informations d'adresse sont des informations d'adresse IP mandataire, les informations d'adresse IP mandataire correspondent à des informations d'adresse IP du dispositif de réseau d'accès, et les informations d'adresse IP sont utilisées pour la transmission des données de détection.

4. Procédé selon la revendication 1, dans lequel les deuxièmes informations d'adresse sont des informations d'adresse IP mandataire, les informations d'adresse IP mandataire correspondent à des informations d'identifiant d'un tunnel entre le dispositif de réseau d'accès et un élément de réseau de fonction de plan utilisateur, et le tunnel est utilisé pour la transmission des données de détection.

5. Procédé selon l'une quelconque des revendications 1 à 4, dans lequel l'obtention (S220), par le dispositif de réseau d'accès, de deuxièmes informations d'adresse comprend :
la réception, par le dispositif de réseau d'accès, des deuxièmes informations d'adresse en provenance d'un élément de réseau de fonction de gestion de session.

6. Procédé selon la revendication 5, dans lequel le procédé comprend en outre :
l'envoi, par le dispositif de réseau d'accès, de premières informations à l'élément de réseau de fonction de gestion de session, les premières informations étant utilisées pour demander les deuxièmes informations d'adresse du dispositif de réseau d'accès ; et
la réception, par le dispositif de réseau d'accès, des deuxièmes informations d'adresse en provenance d'un élément de réseau de fonction de gestion de session comprend :
la réception, par le dispositif de réseau d'accès, depuis l'élément de réseau de fonction de gestion de session, des deuxièmes informations d'adresse en réponse aux premières informations.

7. Procédé selon la revendication 6 lorsqu'elle dépend de la revendication 4, dans lequel les premières informations comprennent les informations d'identifiant du tunnel entre le dispositif de réseau d'accès et l'élément de réseau de fonction de plan utilisateur, et le tunnel est utilisé pour la transmission des données de détection ;
les premières informations comprennent les premières informations d'adresse ;
les premières informations comprennent les premières informations d'adresse et les informations d'adresse IP du dispositif de réseau d'accès, les informations d'adresse IP étant utilisées pour la transmission des données de détection ; ou
les premières informations comprennent les premières informations d'adresse et les informations d'identifiant du tunnel.

8. Procédé de transmission d'informations, dans lequel le procédé comprend :
l'envoi (S210), par un serveur d'application, de premières informations d'adresse du serveur d'application ;
la réception (S230), par le serveur d'application, de deuxièmes informations d'adresse d'un dispositif de réseau d'accès, le dispositif de réseau d'accès étant configuré pour générer des données de détection, et les premières informations d'adresse et les deuxièmes informations d'adresse étant utilisées pour établir une connexion de communication entre le dispositif de réseau d'accès et le serveur d'application qui est utilisée pour la transmission des données de détection ; et
la réception (S240), par le serveur d'application, des données de détection en provenance du dispositif de réseau d'accès au moyen de la connexion de communication.

9. Procédé selon la revendication 8, dans lequel les deuxièmes informations d'adresse sont des informations d'adresse de protocole Internet IP du dispositif de réseau d'accès.

10. Procédé selon la revendication 8, dans lequel les deuxièmes informations d'adresse sont des informations d'adresse IP mandataire, les informations d'adresse IP mandataire correspondent à des informations d'adresse IP du dispositif de réseau d'accès, et les informations d'adresse IP sont utilisées pour la transmission des données de détection.

11. Procédé selon l'une quelconque des revendications 8 à 10, dans lequel les deuxièmes informations d'adresse sont des informations d'adresse IP mandataire, les informations d'adresse IP mandataire correspondent à des informations d'identifiant d'un tunnel entre le dispositif de réseau d'accès et un élément de réseau de fonction de plan utilisateur, et le tunnel est utilisé pour la transmission des données de détection.

12. Appareil de transmission d'informations, comprenant : une unité configurée pour réaliser le procédé selon l'une quelconque des revendications 1 à 7 ou le procédé selon l'une quelconque des revendications 8 à 11.

13. Support de stockage lisible par ordinateur, comprenant : un programme informatique dans lequel, lorsque le programme informatique est exécuté sur un ordinateur, l'ordinateur peut réaliser le procédé selon l'une quelconque des revendications 1 à 7 ou le procédé selon l'une quelconque des revendications 8 à 11.

14. Produit programme d'ordinateur dans lequel, lorsque le produit programme d'ordinateur est exécuté sur un ordinateur, l'ordinateur peut réaliser le procédé selon l'une quelconque des revendications 1 à 7 ou le procédé selon l'une quelconque des revendications 8 à 11.

15. Système à puce, comprenant un processeur, configuré pour appeler un programme informatique à partir d'une mémoire et exécuter le programme informatique, pour permettre à un dispositif de communication sur lequel le système à puce est installé de réaliser le procédé selon l'une quelconque des revendications 1 à 7 ou le procédé selon l'une quelconque des revendications 8 à 11.
